**Europäisches Patentamt**

**European Patent Office**

**Office européen des brevets**

(19)

(11) Veröffentlichungsnummer: **0 115 814 B1**

(12) # EUROPÄISCHE PATENTSCHRIFT

(45) Veröffentlichungstag der Patentschrift:
20.11.86

(51) Int. Cl.⁴: **H 04 B 3/56**

(21) Anmeldenummer: **84100719.8**

(22) Anmeldetag: **24.01.84**

(54) Anordnung zur Einspeisung von Tonfrequenzsignalen in ein Stromnetz.

(30) Priorität: 08.02.83 DE 3304243

(43) Veröffentlichungstag der Anmeldung:
15.08.84 Patentblatt 84/33

(45) Bekanntmachung des Hinweises auf die Patenterteilung:
20.11.86 Patentblatt 86/47

(84) Benannte Vertragsstaaten:
AT CH DE FR GB IT LI SE

(56) Entgegenhaltungen:
US - A - 1 539 902

SIEMENS-ZEITSCHRIFT, Band 48, Heft 2, 1974, Seiten 69-75, Erlangen, DE., E.R. PAESSLER: "Technik der Tonfrequenz-Rundsteuerung in Energieversorgungsnetzen"

(73) Patentinhaber: **Siemens Aktiengesellschaft Berlin und München, Wittelsbacherplatz 2, D-8000 München 2 (DE)**

(72) Erfinder: **Kutschera, Karlheinz, Dipl.-Phys., Alter Garten 10, D-8521 Bräuningshof (DE)**
Erfinder: **Scharm, Walther, Dipl.-Ing., Elsässer Strasse 4, D-8500 Nürnberg (DE)**
Erfinder: **Seibert, Rudolf, Dipl.-Ing., Ansgarstrasse 8, D-8500 Nürnberg (DE)**
Erfinder: **Schwendtner, Manfred, Dipl.-Ing., St. Gundekarstrasse 3, D-8501 Schwarzenbruck (DE)**

## Beschreibung

Die Erfindung betrifft eine Anordnung zur Einspeisung von Tonfrequenzsignalen in ein zentrale Kompensationskondensatoren enthaltendes Stromnetz über einen Einspeisewandler, dessen Primärwicklung mit einem Tonfrequenzsignalgenerator verbunden ist.

In Stromnetzen erfolgt häufig eine Befehls- oder Informationsübertragung mit Hilfe von Signalen, die der Netzspannung überlagert werden. Die Frequenz dieser Signale liegt üblicherweise im Tonfrequenzbereich zwischen 150 Hz und 20 kHz, sie werden daher auch als Tonfrequenzsignale bezeichnet. Die Einspeisung dieser Tonfrequenzsignale erfolgt üblicherweise über einen Einspeisewandler, dessen Primärwicklung mit einem Tonfrequenzsignalgenerator verbunden ist und dessen Sekundärwicklung zwischen zwei Phasen geschaltet ist. Dabei ist jedoch zu beachten, dass gegebenenfalls im Netz vorhandene Kondensatoren das Tonfrequenzsignal belasten. Beispielsweise Mittelspannungsnetze werden häufig mit im Stern geschalteten Kompensationskondensatoren zentral kompensiert. Diese Kompensationskondensatoren weisen eine verhältnismässig hohe Kapazität auf. Für die Tonfrequenzsignale stellen diese Kompensationskondensatoren eine Impedanz dar, die um so kleiner ist, je höher die Frequenz der Tonfrequenzsignale ist. Die Kompensationskondensatoren stellen daher eine starke Belastung für den Tonfrequenzgenerator dar, die vor allem im oberen Frequenzbereich der Tonfrequenzsignale einem Kurzschluss gleichkommt. Bei höheren Frequenzen würde man daher zur Einspeisung der Tonfrequenzsignale ohne zusätzliche Massnahmen eine unwirtschaftlich hohe Sendeleistung benötigt. Ausserdem würden die Tonfrequenzsignale eine zusätzliche Belastung für die Kompensationskondensatoren darstellen. Bei ausgeführten Anlagen wird daher jedem Kondensator eine Drossel vorgeschaltet. Dadurch wird die für die Tonfrequenzsignale wirksame Impedanz erhöht, d.h. die Belastung für den Tonfrequenzsignalgenerator verringert. Da derartige Drosseln jedoch auf den vollen, durch den Kondensator fliessenden Strom ausgelegt sein müssen, werden diese sehr gross und sind schwer zu installieren.

Aufgabe der Erfindung ist es daher, eine Anordnung zur Einspeisung von Tonfrequenzsignalen der eingangs genannten Art so auszugestalten, dass die Kompensationskondensatoren auch ohne vorgeschaltete Drosseln den Tonfrequenzsignalgenerator nicht belasten.

Diese Aufgabe wird erfindungsgemäss dadurch gelöst, dass die Sekundärwicklung des Einspeisewandlers in Reihe zu einem Kompensationskondensator liegt. Damit wird erreicht, dass die Kompensationskondensatoren nicht in einem Parallelzweig zur Sekundärwicklung des Einspeisewandlers liegen und damit keine Belastung für das Tonfrequenzsignal darstellen. Das Tonfrequenzsignal wird über die zur Sekundärwicklung in Reihe geschalteten Kompensationskondensatoren in das Stromnetz eingekoppelt, wobei die Einkopplung einerseits über einen und andererseits über zwei parallel geschaltete Kompensationskondensatoren erfolgt. Die Kompensationskondensatoren behindern also die Ausbreitung der Tonfrequenzsignale nicht, sondern fördern diese sogar. Vorgeschaltete Drosseln sind nicht erforderlich, und die Anordnung ist einfach zu installieren.

Bei einer Anordnung, bei der die Kompensationskondensatoren in einem Sternpunkt miteinander verbunden sind, kann in die zwei Kompensationskondensatoren verbindende Leitung die Sekundärwicklung des Einspeisewandlers eingefügt sein.

Der Einspeisewandler weist im magnetischen Kreis zweckmässigerweise einen hohen Widerstand auf. Da auf diese Weise eine Sättigung des Einspeisewandlers auch ohne entsprechende Bürde vermieden wird, ist kein für die Netzfrequenz niederohmiger Abschluss der Primärwicklung des Einspeisewandlers erforderlich. Der hohe Widerstand im magnetischen Kreis wird am einfachsten dadurch erreicht, dass der Einspeisewandler im Kern einen Luftspalt aufweist.

Alternativ kann der Sekundärwicklung des Einspeisewandlers ein auf die Tonfrequenz abgestimmter Parallelschwingkreis parallel geschaltet werden. Dessen Schwingkreisspule stellt für die Netzfrequenz eine niedrige Impedanz dar, so dass der Einspeisewandler für die Netzfrequenz niederohmig überbrückt ist. Damit wird eine Sättigung des Einspeisewandlers durch den netzfrequenten Strom vermieden. Für die Tonfrequenz ist der Widerstand des Parallelschwingkreises hoch, so dass er den Tonfrequenzgenerator praktisch nicht belastet.

Wenn im Stromnetz weitere Kompensationskondensatoren vorhanden sind, wird vorteilhafterweise in der Phase des Stromnetzes, in der die Sekundärwicklung des Einspeisewandlers angeordnet ist, zum weiteren Kompensationskondensator ein auf die Tonfrequenz abgestimmter Parallelschwingkreis in Reihe geschaltet. Damit wird ein Kurzschluss des Tonfrequenzsignals durch die weiteren Kompensationskondensatoren verhindert. Es reicht aus, den Parallelschwingkreis in einer Phase vorzusehen, da die beiden anderen Phasen als gemeinsamer Rückleiter für das Tonfrequenzsignal dienen.

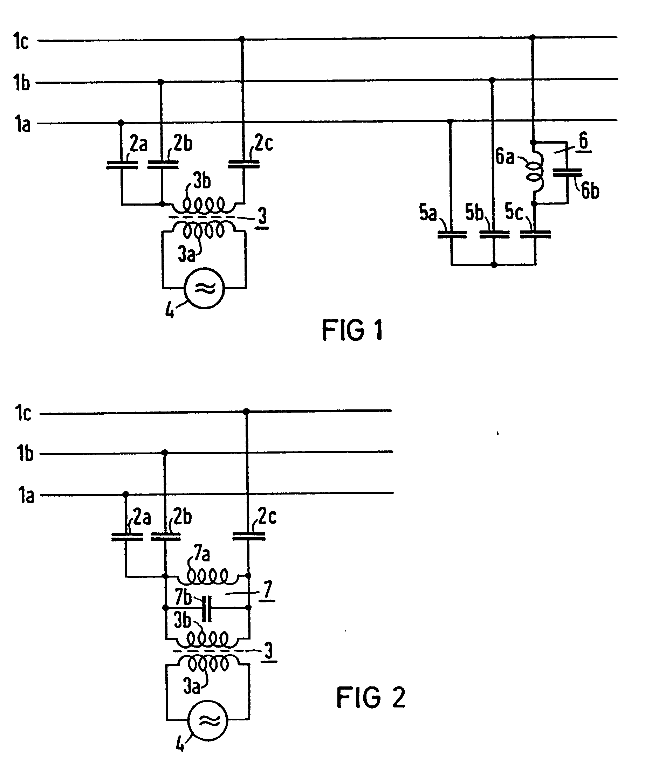

Ein Ausführungsbeispiel der Erfindung wird nachfolgend anhand der Fig. 1 und 2 näher erläutert.

Die Fig. 1 zeigt ein Stromnetz mit drei Phasenleitern 1a, 1b, 1c. Dieses Stromnetz, das beispielsweise ein Mittelspannungsnetz sein kann, weist an einer zentralen Stelle eine Blindstromkompensationseinrichtung mit drei Kompensationskondensatoren 2a, 2b, 2c auf. Dabei ist jeweils der erste Anschluss der Kompensationskondensatoren 2a bis 2c mit einem Phasenleiter 1a bis 1c verbunden. Die jeweils zweiten Anschlüsse der Kompensationskondensatoren 2a und 2b sind miteinander verbunden und ausserdem über die Sekundärwicklung 3b eines Einspeisewandlers 3 mit dem zweiten Anschluss des Kompensationskondensators 2c verbunden. An die Primärwicklung 3a des Einspeisewandlers 3 ist ein Tonfrequenzsignalgenerator angeschlossen.

Die Kompensationskondensatoren 2a bis 2c sind also im Stern geschaltet, wobei sich die geringe Streuinduktivität der Sekundärwicklung 3b für die Aufgabe der Blindstromkompensation praktisch nicht auswirkt. Das vom Tonfrequenzsignalgenerator 4 gelieferte Signal wird über den Einspeisewandler 3 und den Kompensationskondensator 2c in den Phasenleiter 1c, über den Kompensationskondensator 2b in den Phasenleiter 1b, und über den Kompensationskondensator 2a in den Phasenleiter 1a eingekoppelt. Dabei wirken die Kompensationskondensatoren 2a bis 2c nicht wie bei herkömmlichen Anordnungen als Kurzschluss für die Tonfrequenzsignale, da sie in Reihe und nicht parallel zur Primärwicklung 3b angeordnet sind. Das Tonfrequenzsignal wird also durch die Kompensationskondensatoren 2a bis 2c unabhängig von deren Impedanz nicht geschwächt. Die Kompensationskondensatoren 2a bis 2c bewirken in diesem Fall sogar die Einkopplung des Tonfrequenzsignals auf die einzelnen Phasenleiter 1a bis 1c. Den Kompensationskondensatoren 2a bis 2c muss also keine Drossel vorgeschaltet werden. Die dargestellte Anordnung lässt sich leicht in eine die Kompensationskondensatoren 2a bis 2c enthaltende Netzstation installieren.

Beim Ausführungsbeispiel nach Fig. 1 enthält das Mittelspannungnetz weitere, ebenfalls in Stern geschaltete Kompensationskondensatoren 5a bis 5c. Um zu verhindern, dass diese das Tonfrequenzsignal kurzschliessen oder belasten, ist zum Kompensationskondensator 5c ein auf die Tonfrequenz abgestimmter Parallelschwingkreis 6 in Reihe geschaltet. Dieser Parallelschwingkreis 6 muss nur in einer Phase 1c des Drehstromnetzes angeordnet werden, nämlich in derselben Phase, in der auch die Sekundärwicklung 3b des Einspeisewandlers 3 liegt. Für die beiden anderen, als gemeinsame Rückleiter dienenden Phasen 1a und 1b ist eine Tonfrequenzsperre nicht erforderlich.

Beim Ausführungsbeispiel nach Fig. 1 muss der Kern des Einspeisewandlers 3 einen hohen magnetischen Widerstand aufweisen, der beispielsweise mit einem Luftspalt erzielt werden kann. Damit wird verhindert, dass der über die Kompensationskondensatoren 2a bis 2c fliessende 50-Hz-Strom zu einer Sättigung des Wandlers 3 führt.

Alternativ kann man aber auch gemäss einem Ausführungsbeispiel nach Fig. 2 der Sekundärwicklung 3b einen aus einer Schwingkreisspule 7a und einem Kondensator 7b bestehenden, auf die Tonfrequenz abgstimmten Parallelschwingkreis 7 parallel schalten. Die Schwingkreisspule 7a stellt für netzfrequente Ströme einen niederohmigen Nebenschluss für den Einspeisewandler 3 dar. Damit wird eine Sättigung des Einspeisewandlers 3 auch ohne hohen magnetischen Widerstand verhindert, so dass der Einspeisewandler 3 kleiner aufgebaut werden kann. Für die Tonfrequenz ist der Parallelschwingkreis 7 hochohmig, so dass er das Tonfrequenzsignal praktisch nicht belastet.

## Patentansprüche

1. Anordnung zur Einspeisung von Tonfrequenzsignalen in ein zentrale Kompensationskondensatoren (1) enthaltendes Stromnetz über einen Einspeisewandler (2), dessen Primärwicklung (3) mit einem Tonfrequenzsignalgenerator (4) verbunden ist, dadurch gekennzeichnet, dass die Sekundärwicklung (3b) des Einspeisewandlers in Reihe zu einem Kompensationskondensator (2c) liegt.

2. Anordnung nach Anspruch 1, wobei die Kompensationskondensatoren (1) in einem Sternpunkt miteinander verbunden sind, dadurch gekennzeichnet, dass in die zwei Kompensationskondensatoren (2b, 2c) verbindende Leitung die Sekundärwicklung (3b) des Einspeisewandlers (3) eingefügt ist.

3. Anordnung nach Anspruch 1 oder 2, dadurch gekennzeichnet, dass der Einspeisewandler (3) im magnetischen Kreis einen hohen Widerstand aufweist.

4. Anordnung nach Anspruch 3, dadurch gekennzeichnet, dass der Einspeisewandler (3) im Kern einen Luftspalt aufweist.

5. Anordnung nach Anspruch 1 oder 2, dadurch gekennzeichnet, dass der Sekundärwicklung (3b) des Einspeisewandlers ein auf die Tonfrequenz abgestimmter Parallelschwingkreis (7) parallel geschaltet ist.

6. Anordnung nach einem der Ansprüche 1 bis 5, wobei im Stromnetz weitere Kompensationskondensatoren (5) vorhanden sind, dadurch gekennzeichnet, dass in derjenigen Phase (1c) des Stromnetzes, in der die Sekundärwicklung (3b) des Einspeisewandlers (3) angeordnet ist, zum zugehörigen weiteren Kompensationskondensator (5c) ein auf die Tonfrequenz abgestimmter Parallelschwingkreis (6) in Reihe geschaltet ist.

## Claims

1. An arrangement for feeding audio frequency signals into a power distribution network containing central compensation capacitors (1), via a feed transformer (3) whose primary winding (3a) is connected to an audio frequency signal generator (4), characterised in that the secondary winding (3b) of the feed transformer is arranged in series with a compensation capacitor (2c).

2. An arrangement is claimed in claim 1, where the compensating capacitors (1) are connected to one another in a star network, characterised in that the secondary winding (3b) of the feed transformer (3) is interposed into the line connecting two compensation capacitors (2b, 2c).

3. An arrangement as claimed in claim 1 or 2, characterised in that the feed transformer (3) has a high impedance magnetic circuit.

4. An arrangement as claimed in claim 3, characterised in that the feed transformer (3) has an air gap in its core.

5. An arrangement as claimed in claim 1 or claim 2, characterised in that the secondary winding (3b) of the feed transformer is connected across a parallel oscillatory circuit (7) tuned to the audio frequency.

6. An arrangement as claimed in one of claims 1 to 5, where the power distribution network contains additional compensation capacitors (2), characterised in that that phase (1c) of the power distribution network to which the secondary winding (3b) of the feed transformer (3) is connected has a parallel oscillatory circuit (6) tuned to the audio frequency, connected in series with an associated compensation capacitor (5c).

## Revendications

1. Dispositif pour introduire des signaux à fréquences vocales dans un réseau central de distribution d'énergie électrique contenant des condensateurs de compensation (1), par l'intermédiaire d'un transformateur d'alimentation (2), dont l'enroulement primaire (3) est relié à un générateur de signaux à fréquences vocales (4), caractérisé par le fait que l'enroulement secondaire (3b) du transformateur d'énergie est branché en série avec un condensateur de compensation (2c).

2. Dispositif suivant la revendication 1, dans lequel les condensateurs de compensation (1) sont reliés entre eux au niveau d'un point neutre, caractérisé par le fait que l'enroulement secondaire (3b) du transformateur d'alimentation (3) est inséré dans le conducteur reliant deux condensateurs de compensation (2b, 2c).

3. Dispositif suivant la revendication 1 ou 2, caractérisé par le fait que le transformateur d'alimentation (3) possède un circuit magnétique de résistance élevée.

4. Dispositif suivant la revendication 3, caractérisé par le fait que le noyau du transformateur d'alimentation (3) comporte un entrefer.

5. Dispositif suivant la revendication 1 ou 2, caractérisé par le fait qu'un circuit oscillant parallèle (7) accordé sur les fréquences vocales est branché en parallèle avec l'enroulement secondaire (3b) du transformateur d'alimentation.

6. Dispositif suivant l'une des revendications 1 à 5, dans lequel d'autres condensateurs de compensation (5) sont présente dans le réseau de distribution d'énergie électrique, caractérisé par le fait qu'un circuit oscillant parallèle (6) réglé sur les fréquences vocales est branché en série avec l'autre condensateur de compensation associé (5c), dans la phase (1c) du réseau, dans laquelle se trouve disposé l'enroulement secondaire (3b) du transformateur d'alimentation (3).

FIG 1

FIG 2